# EUROPÄISCHE PATENTSCHRIFT

(11) **EP 2 327 496 B1**
(45) Veröffentlichungstag und Bekanntmachung des Hinweises auf die Patenterteilung: **31.10.2012**
(21) Anmeldenummer: 10014585.3
(22) Anmeldetag: 13.11.2010
(51) Int. Cl.: B23D 49/16

(54) **Hand-Werkzeugmaschine mit einer Gleitsohle**
Manually operated machine tool with a sliding sole
Machine-outil manuelle dotée d'un patin

(30) Priorität: 26.11.2009 DE 102009055827
(43) Veröffentlichungstag der Anmeldung: 01.06.2011
(73) Patentinhaber: Festool GmbH, 73240 Wendlingen (DE)
(72) Erfinder: Reuss, Torsten, 73265 Dettingen unter Teck (DE)
(74) Vertreter: Bregenzer, Michael

(56) Entgegenhaltungen:
- EP-A2- 0 163 186
- EP-A2- 2 105 233
- US-A- 4 051 597
- US-A1- 2007 000 368

## Beschreibung

Die Erfindung betrifft eine Hand-Werkzeugmaschine, insbesondere eine Hubsäge oder Oberfräse, mit einem in einem Gehäuse angeordneten Antriebsmotor zum Antreiben eines Werkzeugs, mit einem an dem Gehäuse angeordneten Fußkörper und eine Gleitsohle, gemäß dem Oberbegriff der Anspruchsen 1 und 13,

Eine derartige Hand-Werkzeugmaschine und enie derartige gleitshole gehen aus US 2007/000368 A1 hervor.

Aus US 4051597 geht eine eine Führungseinrichtung für eine Säge hervor.

Eine weitere Hand-Werkzeugmaschine, an deren Fußteil eine Gleitsohle lösbar befestigbar ist, geht beispielsweise aus DE 34 20 442 A1 hervor. Die Gleitsohle wird mittels Schrauben an der Sohlenfläche des Fußkörpers, den man auch als Sägetisch bezeichnen kann, befestigt. Da der Bediener jeweils zum Wechsel der Gleitsohle einen Schraubenzieher benötigt, ist die Handhabung kompliziert. Ein Gleitsohlenwechsel kommt nur in größeren Abständen in Frage, wenn die Gleitsohle tatsächlich verschlissen ist. Eine Anpassung an den jeweiligen Untergrund, d.h. der Austausch einer Gleitsohle gegen eine andere, für den Untergrund besser geeignete Gleitsohle, ist dabei in der Praxis nahezu ausgeschlossen. Weiterhin droht die Gefahr, dass die Schraubenköpfe den Untergrund beschädigen, wenn sie vor die Gleitfläche etwas vorstehen.

Es ist daher die Aufgabe der vorliegenden Erfindung, eine Hand-Werkzeugmaschine sowie eine Gleitsohle dafür bereitzustellen, wobei die Gleitsohle leicht auswechselbar sein soll und einen guten Halt an der Hand-Werkzeugmaschine hat.

Zur Lösung der Aufgabe sind eine Hand-Werkzeugmaschine gemäß der technischen Lehre des Anspruchs 1 und eine gleit sohle gemäß dem Anspruch 13 vorgesehen.

Ein Grundgedanke der Erfindung ist es, dass die Gleitsohle sozusagen mit der Hand-Werkzeugmaschine bzw. deren Fußkörper verhakt wird. Somit kann beispielsweise eine Hubsäge, insbesondere eine Stichsäge, eine Oberfräse oder ein sonstiges maschinelles Hand-Werkzeug leicht und ohne großen Aufwand mit einer Gleitsohle versehen werden. Eine Anpassung an die jeweiligen Erfordernisse, beispielsweise ein Austausch einer Gleitsohle mit einer ersten Gleiteigenschaft gegen eine Gleitsohle mit einer anderen, zweiten Gleiteigenschaft fällt dabei leicht. Die Gleitsohle hält fest an der Maschine, jedenfalls lässt sie sich senkrecht zum Gleitbereich nicht von der Hand-Werkzeugmaschine entfernen.

Der Fußkörper kann am Gehäuse der Hand-Werkzeugmaschine lösbar befestigt sein. Es ist auch möglich, dass das Gehäuse den Fußkörper bildet oder umfasst.

Die Sohlenfläche und die Grundfläche liegen zweckmäßigerweise formschlüssig an einander an. Die Bezeichnung Sohlenfläche ist dabei nicht so zu verstehen, dass eine durchgehende, ohne Unterbrechung ausgestaltete Sohlenfläche vorhanden sein muss. Vielmehr ist es zweckmäßig, wenn der Fußkörper beispielsweise eine Verrippung aufweist, wobei flächige Bereiche vorgesehen sind, die insgesamt die Sohlenfläche bilden und in der Befestigungsstellung des Fußteils, in der dieses an dem Fußkörper befestigt ist, flächig an der Grundwand der Gleitsohle anliegen.

Dadurch wird eine besonders bevorzugte Ausführungsform der Erfindung erreicht, bei der zwischen der Sohlenfläche und der Grundwand kein oder allenfalls ein sehr geringes Spiel vorhanden ist. Die Führungsqualität ist dadurch verbessert.

Mindestens eine Wirkkombination aus einem Haken und einem Haken-Widerlager weist eine Auflagefläche auf, die quer, beispielsweise rechtwinklig quer oder schräg, zur der Normalen des Gleitbereiches verläuft. Die Auflageflächen der Wirkkombination liegen in der Befestigungsstellung flächig aneinander an. Auch diese Maßnahme trägt zu einem formschlüssigen Halt der Gleitsohle an dem Fußkörper bei.

Weiterhin ist es vorteilhaft, wenn die Grundwand der Gleitsohle oder die Gleitsohle insgesamt und/oder einer oder mehrere der Haken und/oder mindestens ein Haken-Widerlager im Wesentlichen biegesteif sind. Auch diese Maßnahme trägt zu einem spielarmen oder gar spielfreien Halt der Gleitsohle am Fußkörper bei. Bei einer Verbindung mittels beispielsweise Klettmaterial besteht zwischen der Gleitsohle und dem Fußkörper jedenfalls ein Spiel.

Der Gleitbereich besteht zweckmäßigerweise aus einem thermoplastischen Kunststoff. Dieses Material kann auch für die Gleitsohle insgesamt verwendet werden. Bevorzugt ist ein Polyamid-Kunststoff. In der Praxis hat sich eine Faserverstärkung, insbesondere eine Glasfaserverstärkung, als vorteilhaft herausgestellt. Jedenfalls ist ein solcher faserverstärkter Kunststoff verschleißarm.

Von der Grundwand der Gleitsohle steht mindestens eine Umfangswand winkelig ab, die einer Seitenrandfläche des Fußkörpers zugeordnet ist. An dieser Seitenrandfläche liegt die mindestens eine Umfangswand vorteilhaft flächig an. Aber auch eine punktuelle Anlage an mehreren, beabstandeten Flächen, trägt dazu bei, dass die Umfangswand von dem Fußkörper abgestützt ist. Die Umfangswand, die die Gleitsohle sozusagen zu einem Gleitschuh macht, überdeckt auch Seitenbereiche des Fußkörpers, so dass dieser beispielsweise beim Anstoßen gegen eine Werkstückkante nicht beschädigt wird und/oder das Werkstück nicht durch den Fußkörper beschädigt wird. Die Umfangswand kann beispielsweise eine Frontwand sein, die in Arbeitsrichtung vorn ist. Die Arbeitsrichtung ist diejenige Richtung, mit der das Werkstück durch die Hand-Werkzeugmaschine üblicherweise bearbeitet wird. Beispielsweise ist die Arbeitsrichtung eine nach vorn in Richtung einer Sägezahnreihe eines Sägeblattes gerichtete Richtung. Die Umfangswand kann aber auch eine hintere Rückwand umfassen

Die Umfangswand umfasst eine Seitenwand.

Die Umfangswand kann formstabil bzw. biegesteif sein. Es ist aber auch möglich, dass die Umfangswand beispielsweise zum Verrasten der Gleitsohle mit dem Fußkörper flexibel ist. Wenn der Fußkörper auf die Gleitsohle aufgesetzt wird, weicht die Umfangswand seitlich aus, um anschließend wieder zum Fußkörper zurück zu federn und zu verrasten.

An einander entgegengesetzten Endbereichen der Gleitsohle sind zweckmäßigerweise einerseits eine Umfangswand und andererseits eine Einstecköffnung vorhanden. Im Bereich der Einstecköffnung befinden sich zweckmäßigerweise ein Haken und/oder ein Haken-Widerlager. Die Umfangswand umfasst beispielsweise die Frontwand, während an der Rückseite die Einstecköffnung vorhanden ist. Die Frontwand legt den Fußkörper bezüglich der Arbeitsrichtung fest. Entgegen der Arbeitsrichtung hingegen ist der Haken bzw. das Haken-Widerlager wirksam.

Es versteht sich, dass auch mehrere, zueinander winkelige oder bogenförmige Umfangswände vorhanden sein können. Diese bilden zweckmäßigerweise eine im Wesentlichen U-förmige Aufnahme für den Fußkörper. Somit kann der Fußkörper sozusagen in die Gleitsohle eingeschoben werden. Diese bildet eine Art Gleitschuh. Die Umfangswände begrenzen in dieser Ausgestaltung der Erfindung eine Steckaufnahme. Eine oder mehrere der Umfangswände können zum Halt der Gleitsohle an dem Fußkörper bezüglich der Normalen des Gleitbereiches ausgestaltet sein. Beispielsweise kann an dieser Umfangswand ein Haken-Widerlager oder ein Haken, insbesondere in der Ausgestaltung eines Haltebackens, vorhanden sein. Weiterhin ist es denkbar, dass die Umfangswand, beispielsweise die Frontwand oder eine Seitenwand, eine Aufnahme oder Aussparung zur Aufnahme des Fußkörpers aufweist. Selbstverständlich könnte auch ein Vorsprung zum Eingriff in den Fußkörper an einer oder mehreren der Umfangswände vorhanden sein.

Bevorzugt ist eine einfache, auf einer Steckbewegung basierende Montage der Gleitsohle am Fußkörper. Hierfür weist die Gleitsohle zweckmäßigerweise eine Steckaufnahme zum Einstecken des Fußkörpers auf. Es versteht sich, dass auch der umgekehrte Fall gegeben sein kann, dass nämlich der Fußkörper eine Steckaufnahme zum Einstecken der Gleitsohle aufweist.

Der Fußkörper und die Gleitsohle sind zur Einnahme einer Steckstellung aneinander ansteckbar. In der Steckstellung sind sie jedoch noch nicht miteinander fest verbunden, sondern noch verschieblich. Sodann schließt sich an die Steckbewegung eine Schiebebewegung an, so dass schließlich in einer Hakstellung die Haken und Haken-Widerlager der Hakenanordnung miteinander verhakt sind. Beispielsweise werden der Fußkörper und die Gleitsohle entlang einer Steckachse zueinander hin bewegt und anschließend quer zu der Steckachse verschoben. An dieser Stelle sei bemerkt, dass auch eine bogenförmige oder schräg verlaufende Steckverbindung möglich ist, an die sich eine Verhakbewegung sequentiell oder mit kontinuierlichem Übergang anschließt.

Neben mindestens einem Haken und einem diesem zugeordneten Haken-Widerlager ist zweckmäßigerweise ein Steckzwischenraum vorgesehen, der die vorgenannte Steckbewegung ermöglicht. Es versteht sich, dass auch mehrere solcher zueinander beabstandeter Haken und Haken-Widerlager vorgesehen sein können. Eine bevorzugte Ausführungsform der Erfindung sieht vor, dass an einander gegenüberliegenden Umfangswänden, beispielsweise Seitenwänden, mehrere, zueinander beabstandete Haken oder Haltebacken vorhanden sind. Zwischen den Haken-Widerlagern des Fußkörpers, die diesen Haken zugeordnet sind, sind ebenfalls Abstände vorhanden. Somit ist es möglich, die Haken oder Haltebacken sozusagen in die Zwischenräume zwischen den Haken-Widerlagern einzustecken und sodann die vorgenannte Schiebebewegung in die Hakstellung vorzunehmen.

An dem Fußkörper und der Gleitsohle sind zweckmäßigerweise Rastmittel zum Verrasten der Gleitsohle mit dem Fußkörper vorhanden. Diese Rastmittel können beispielsweise federnde Rastvorsprünge, beispielsweise Kugeln und dergleichen, umfassen, die in korrespondierende Rastaufnahmen einrasten. Bevorzugt sind die Rastmittel der vorgenannten Hakstellung zugeordnet bzw. in dieser wirksam.

Die Rastmittel umfassen zweckmäßigerweise einen oder mehrere Rasthaken. In dieser Ausgestaltung könnte man auch sagen, dass die Hakenanordnung die Rastmittel umfasst oder dass die Rastmittel einen Teil der Hakenanordnung bilden.

Eine Betätigungshandhabe zum Verstellen eines Rasthakens der Rastmittel aus einer Raststellung in eine Lösestellung ist zweckmäßigerweise an der Grundwand angeordnet. Beispielsweise ist die Betätigungshandhabe zur Betätigung von dem Gleitbereich her bzw. von Gleitbereich weg ausgestaltet. Dadurch wird vermieden, dass die Betätigungshandhabe betätigbar ist, wenn die Gleitsohle mit ihrem Gleitbereich auf dem Untergrund aufliegt und an diesem entlang gleitet.

Die Gleitsohle und der Fußkörper schlagen beim Verschieben entlang einer Verschieberichtung zueinander hin mit einander zugeordneten Anschlägen aneinander an. Mindestens einer der Rasthaken, zweckmäßigerweise zwei oder mehrere Rasthaken, haben eine widerlagerfläche für eine zugfeste Verbindung entgegen der Verschieberichtung zwischen der Gleitsohle und dem Fußkörper. Somit bildet sozusagen der Schiebeanschlag eine Bewegungsbegrenzung in der einen Richtung, nämlich der Verschieberichtung, wohingegen der mindestens eine Rasthaken in der dazu entgegengesetzten Richtung wirksam ist. Zweckmäßigerweise ist der mindestens eine Rasthaken neben dem Anschlag angeordnet. Besonders bevorzugt ist es, wenn der Anschlag zwischen zwei Rasthaken angeordnet ist. Dadurch wird dem Umstand Rechnung getragen, dass die beiden Rasthaken biegeflexibel sind, während der Anschlag beispielsweise durch einen feststehenden, formstabilen Haken gebildet ist. Dennoch wird ein fester Halt erzielt, obwohl die Rasthaken eine gewisse Flexibilität aufweisen.

Bevorzugt ist es, wenn der Anschlag und/oder der mindestens eine Rasthaken eine quer zu der Normalen des Gleitbereichs wirksame Stützfläche aufweisen. Somit wirken also der Rasthaken und der Anschlag als Befestigungsmittel, die die Gleitsohle in der normalen Richtung am Fußkörper halten.

Wie bereits erwähnt, ist es vorteilhaft, wenn an einer oder mehreren der Umfangswänden Haken oder Hakenwiderlager angeordnet sind. Aber auch in einem Zwischenraum zwischen diesen Umfangswänden ist es vorteilhaft, wenn die Gleitsohle fest an dem Fußkörper, jedenfalls bezüglich der normalen Richtung, befestigt ist. Die Hakenanordnung weist daher zweckmäßigerweise mindestens einen an der Grundwand der Gleitsohle angeordneten Haken oder mindestens ein an dieser Grundwand angeordnetes Haken-Widerlager auf. Der Gleitbereich und der Haken bzw. das Widerlager sind an einander entgegengesetzten Seiten der Grundwand angeordnet. Somit wird ein Ausbeulen der Grundwand vom Fußkörper weg vermieden.

An dem Fußkörper oder vorteilhaft der Gleitsohle ist zweckmäßigerweise eine Splitterschutz-Steckaufnahme für einen durch das Werkzeug einschneidbaren Splitterschutzkörper angeordnet. Der Splitterschutzkörper verhindert beim Betrieb der Hand-Werkzeugmaschine ein Aussplittern oder Absplittern von Spänen aus dem Werkstück und ist zu diesem Zwecke nahe bei dem Werkstück angeordnet, jedenfalls wenn man die Hand-Werkzeugmaschine benutzt. Bevorzugt ist es, wenn der Splitterschutz auf dem Werkstück aufliegt. Mithin hat also der Splitterschutz zweckmäßigerweise ebenfalls einen Gleitbereich oder eine Gleiteigenschaft. Der Splitterschutzkörper und die Splitterschutz-Steckaufnahme weisen eine Rastanordnung auf, mit der der Splitterschutzkörper in mindestens zwei unterschiedlichen Stellungen, d.h. in zwei Stellungen mit unterschiedlichem Abstand zu dem Werkzeug verrastbar ist. Wenn also der Splitterschutz beim Betrieb der Hand-Werkzeugmaschine verschleißt, kann er näher zum Werkzeug hin verschoben werden, wo er erneut einrastet.

An dem Gleitbereich ist zweckmäßigerweise eine Gleitplatte, ein Gleitgewebe, ein Gleitgewirk oder der dergleichen angeordnet. Eine solche Gleitplatte, ein Gleitgewebe oder auch ein Gleitgewirk, beispielsweise ein Filzmaterial, kann man zweckmäßigerweise auswechseln. Beispielsweise eignet sich Doppelklebeband, eine Klettverbindung oder dergleichen für ein auswechselbares Gleitmaterial. Bevorzugt ist jedoch, wenn an dem Gleitbereich eine Grundfläche vorhanden ist, vor die Gleitvorsprünge zum Gleiten auf dem Untergrund vorstehen. Eine solche Gleitstruktur ermöglicht es, dass sich Späne, Sägemehl oder sonstige Partikel auf der Gleitfläche ansammeln und dort zu einem Verkratzen des Untergrundes führen. Vielmehr sammelt sich dieses unerwünschte Material in Zwischenräumen zwischen den Gleitvorsprüngen, so dass der Untergrund geschont ist.

Es versteht sich, dass an dem Gleitbereich auch eine Gleitbeschichtung, beispielsweise aus Teflon oder dergleichen, vorgesehen sein kann.

Eine bevorzugte Ausführungsform sieht vor, dass an dem Gleitbereich eine Gleitstruktur mit vor eine Grundfläche des Gleitbereichs vorstehenden Gleitvorsprüngen zum Gleiten auf dem Untergrund vorgesehen ist.

Ein Gedanke dabei ist, dass der Gleitbereich nicht flächig auf dem Untergrund aufliegt, sondern mehrere Gleitvorsprünge aufweist, zwischen denen sich Abstände bzw. Vertiefungen befinden. In diesen Abständen und Vertiefungen können sich Späne oder andere Partikel sammeln, so dass sie nicht unterhalb der Gleitvorsprünge sind, wo sie zu einem Verkratzen des Untergrundes bzw. des Werkstückes führen können.

Die Gleitvorsprünge haben zweckmäßigerweise eine Wölbung von der Grundfläche weg. Beispielsweise können die Gleitvorsprünge eine ballige oder kugelige oder konkave Gestalt aufweisen. Die Gleitvorsprünge sind also beispielsweise in der Art von Teilkugeln oder Kugelsegmenten ausgestaltet, wobei andere, z.B. elliptische Krümmungen oder Wölbungen auch möglich sind. Dadurch entstehen zweckmäßigerweise ballige bzw. kugelige Auflageflächen. Abhängig vom jeweiligen Radius der Kugeln bzw. Gleitballen ist eine jeweilige Gleitfläche größer oder kleiner. Breitere bzw. großflächigere Auflageflächen haben den Vorteil, dass ein Anpressdruck, den ein Bediener auf den Gleitbereich ausübt, pro Gleitvorsprung geringer ist. Kleinere Radien bzw. schmalere Gleitvorsprünge hingegen haben den Vorteil, dass die Gleitvorsprünge beinahe punktartig auf dem Untergrund aufliegen können, wobei der Platz neben dem jeweiligen Gleitvorsprung, in dem sich Späne oder sonstiges Material sammeln können, größer wird.

Die balligen oder kugeligen Gleitvorsprünge haben zweckmäßigerweise einen Durchmesser von etwa 3 bis 10mm, bevorzugt von etwa 6 bis 8 mm, besonders bevorzugt etwa 7mm. Die Kugeln bzw. Kugel-Gleitvorsprünge grenzen mit ihren jeweiligen Randbereichen zweckmäßigerweise aneinander an bzw. sind nahe beieinander angeordnet, wobei nur ein kleiner Spalt zwischen den jeweiligen Gleitvorsprüngen vorhanden ist. Dieser Spalt bzw. Zwischenraum dient dazu, beispielsweise Späne oder sonstige Partikel, die sich auf dem Untergrund befinden, aufzunehmen bzw. abzuführen.

Besonders bevorzugt stehen die Gleitvorsprünge nur unwesentlich vor die Grundfläche vor, beispielsweise etwa 0,5 bis 1,5mm, besonders bevorzugt etwa 1mm.

Die Gleitvorsprünge sind zweckmäßigerweise in der Art von Noppen ausgestaltet. Es ist aber auch möglich, dass die Gleitvorsprünge eine Längsgestalt aufweisen. Wenn die Hand-Werkzeugmaschine fast ausschließlich entlang der Arbeitsrichtung auf dem Untergrund gleitet, können beispielsweise sich parallel zur Arbeitsrichtung erstreckende, längsgestaltete Gleitvorsprünge vorgesehen sein. Noppenartige, zueinander beabstandeten Gleitvorsprünge sind besonders vorteilhaft, wenn die Hand-Werkzeugmaschine nicht nur entlang der Arbeitsrichtung, sondern auch quer dazu, beispielsweise entlang einer Kurvenbahn oder einer Bogenbahn, auf dem Untergrund geführt wird.

Die Gleitvorsprünge sind zweckmäßigerweise in einer Reihenrichtung hintereinander angeordnet, wobei sie im Wesentlichen parallele oder vollständig parallele Gleitvorsprung-Reihen bilden. Zweckmäßigerweise verlaufen die Gleitvorsprung-Reihen etwa in der mindestens einen Arbeitsrichtung oder parallel dazu.

Die Gleitvorsprünge zweier benachbarter Gleitvorsprung-Reihen haben zweckmäßigerweise in der Reihenrichtung einen Versatz zueinander derart, dass bezüglich dieser Reihenrichtung zwischen zwei hintereinander angeordneten Gleitvorsprüngen der einen Gleitvorsprung-Reihe jeweils ein Gleitvorsprung der anderen Gleitvorsprung-Reihe angeordnet ist.

Sowohl bei der noppenartigen Ausgestaltung als auch bei der längsgestaltigen Art der Gleitvorsprünge ist es vorteilhaft, wenn quer zu der Arbeitsrichtung Abstände vorhanden sind. Diese Abstände oder Zwischenräume eignen sich dazu, dass Spanmaterial oder sonstige Partikel aufgenommen werden können.

Zwischen den Gleitvorsprüngen ist zweckmäßigerweise eine in der Arbeitsrichtung verlaufende Rinne vorhanden. Diese Rinne könnte man auch als Spanabfuhrrinne bezeichnen. Besonders bevorzugt ist es, wenn eine solche Rinne die Funktion einer Führungsrinne hat. Somit können die Gleitvorsprünge gleichzeitig eine Führungsfunktion entfalten, beispielsweise wenn die Rinne eine Kante eines Werkstückes aufnimmt, an dem die Hand-Werkzeugmaschine in einer Winkelstellung entlanggeführt wird.

Insbesondere bei der vorgenannten balligen oder kugeligen Gestalt ist es vorteilhaft, wenn die Gleitvorsprünge eine im Wesentlichen runde oder elliptische Querschnittsbasis haben. Es ist aber auch möglich, dass die Gleitvorsprünge in Draufsicht auf die Grundfläche des Gleitbereiches eine polygonale Struktur haben. Beispielsweise kann die Querschnittsbasis dreieckig sein. Es ist möglich, dass sich die Gleitvorsprünge von dieser polygonalen, beispielsweise dreieckigen, Querschnittsbasis weg zu ihrem distalen, von der Grundfläche entfernten Endbereich verjüngen, so dass sie dort die ballige oder kugelige Gestalt aufweisen.

Weiterhin ist es denkbar, dass nicht alle Gleitvorsprünge dieselbe Geometrie aufweisen. So kann es beispielsweise sinnvoll sein, dass sowohl eine polygonale als auch eine runde oder elliptische Querschnittsbasis aufweisende Gleitvorsprünge vorgesehen sind. Es ist auch denkbar, dass beispielsweise einer oder mehrere der Gleitvorsprünge eine Längsgestalt haben, beispielsweise an einem Randbereich oder einem Mittenabschnitt des Gleitbereiches, wohingegen andere Gleitvorsprünge noppenartig sind, beispielsweise in der Art von kugeligen oder balligen Gleitvorsprüngen.

Zu den längsgestaltigen Gleitvorsprüngen ist noch nachzutragen, dass selbstverständlich in Arbeitsrichtung der Hand-Werkzeuge maschine auch mehrere solcher Gleitvorsprünge mit Längsgestalt hintereinander angeordnet sein können. Weiterhin können auch längsgestaltige Gleitvorsprünge eine Wölbung von der Grundfläche weg aufweisen, z.B. im Querschnitt und/oder ihren Längsenden. Insbesondere an ihren jeweiligen Längsenden sind die längsgestaltigen Gleitvorsprünge stirnseitig gerundet.

Mindestens einer der Gleitvorsprünge, vorzugsweise sämtliche der Gleitvorsprünge, weisen mindestens eine zur Arbeitsrichtung schräg verlaufende, beispielsweise lineare, bogenförmige oder sowohl lineare als auch bogenförmigen Abführkontur auf, die zur seitlichen, pflugartigen Abfuhr von auf dem Untergrund lose aufliegenden Partikeln oder Spänen an dem jeweiligen Gleitvorsprung vorbei vorgesehen sind. Beispielsweise zeigt die Spitze eines etwa dreieckigen Gleitvorsprunges in die Arbeitsrichtung nach vorn, während die beiden anderen Spitzen oder Ecken des Dreiecks in Arbeitsrichtung hinten, d.h. zu einer Rückseite oder hinteren Seite des Gleitbereiches hin orientiert sind.

Die erfindungsgemäße Gleitstruktur kann unmittelbar an der Hand-Werkzeugmaschine, beispielsweise deren Fußkörper angeordnet sein. Dieser Fußkörper ist, wie noch nachzutragen wäre, zweckmäßigerweise an dem Gehäuse der Hand-Werkzeugmaschine lösbar befestigt. Es versteht sich, dass das Gehäuse selbst bei einer entsprechenden geometrischen Ausgestaltung den Fußkörper bilden könnte.

Zweckmäßigerweise bildet die Gleitstruktur einen Bestandteil einer Gleitsohle für eine Hand-Werkzeugmaschine, beispielsweise ein Hubsäge, Stichsäge oder Oberfräse, die am Fußkörper mittels Befestigungsmitteln lösbar befestigbar ist. Der Gleitbereich ist an einer Grundwand der Gleitsohle vorgesehen, die zum Überdecken einer Sohlenfläche des Fußkörpers der Hand-Werkzeugmaschine vorgesehen ist.

Nachfolgend werden Ausführungsbeispiele der Erfindung anhand der Zeichnung erläutert. Es zeigen:
- Figur 1: eine perspektivische Schrägansicht einer erfindungsgemäßen Hand-Werkzeugmaschine von schräg oben,
- Figur 2: eine Gleitsohle der Hand-Werkzeugmaschine gemäß Figur 1 von schräg unten,
- Figur 3a: einen Fußkörper der Hand-Werkzeugmaschine gemäß Figur 1 und die Gleitsohle gemäß Figur 2 im gelösten und
- Figur 3b: im zusammenmontierten Zustand, jeweils perspektivisch von schräg oben,
- Figur 4: eine perspektivische Schrägansicht auf eine Unterseite einer weiteren Gleitsohle für die Hand-Werkzeugmaschine gemäß Figur 1,
- Figur 5a: eine Ausschnittvergrößerung A aus Figur 4 mit einem in eine Splitterschutz-Steckaufnahme der Gleitsohle eingesteckten, jedoch gegenüber Figur 4 verschobenen Splitterschutzkörper,
- Figur 5b: eine Ausschnittvergrößerung B aus Figur 4, jedoch mit aus der Steckaufnahme entferntem Splitterschutzkörper,
- Figur 6: eine weitere Bodenansicht einer Gleitsohle für die Hand-Werkzeugmaschine gemäß Figur 1 mit einem textilen Gleitbereich,
- Figur 7a: eine schematische Draufsicht und
- Figur 7b: eine Seitenansicht einer weiteren Gleitsohle mit dreieckförmigen Gleitvorsprüngen,
- Figur 8a: eine Draufsicht und
- Figur 8b: eine Seitenansicht einer Gleitsohle mit Gleitvorsprüngen in Längsgestalt.

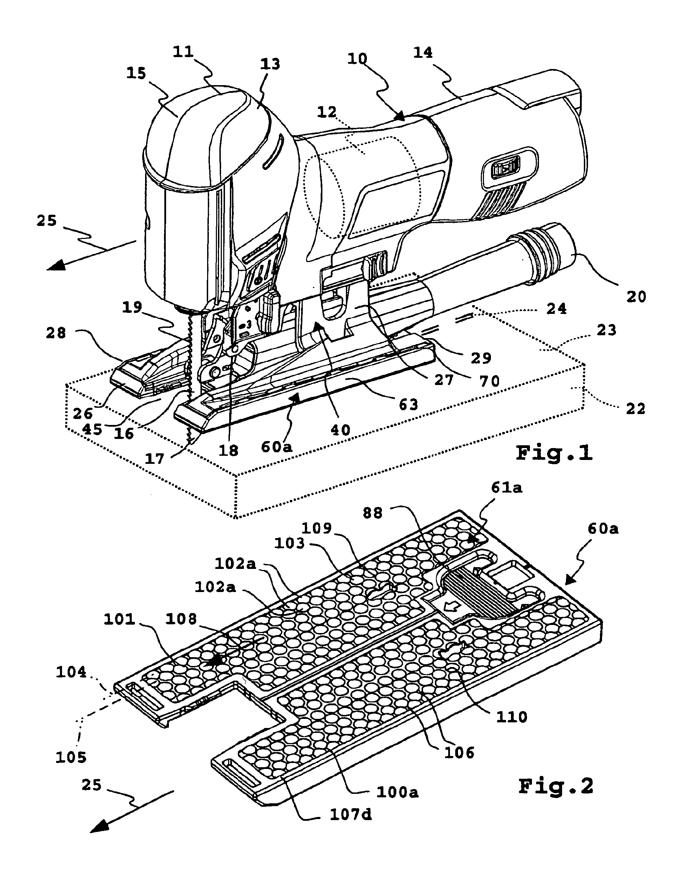

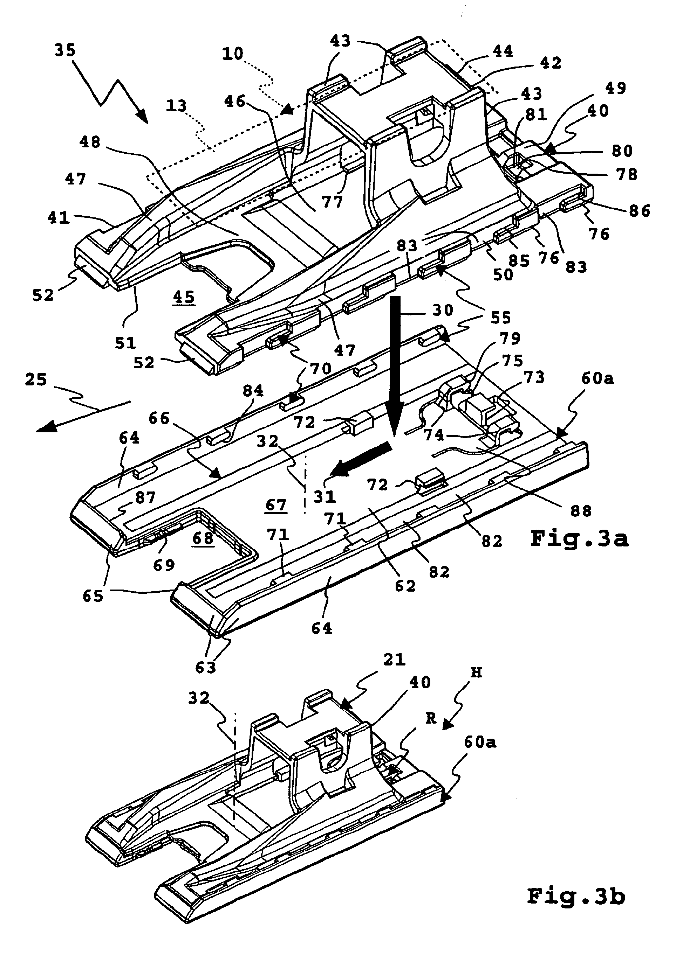

Bei einer in Figur 1 vollständig und in Figur 3a schematisch dargestellten Hand-Werkzeugmaschine 10 handelt es sich um eine Stichsäge. Ein beispielsweise über ein nicht dargestelltes Netzkabel und/oder über einen Akkupack mit elektrischer Energie versorgter Antriebsmotor 12, der in einem Gehäuse 13 angeordnet ist, treibt ein Werkzeug 16 an. Das Gehäuse 13 hat einen hinteren, vom Werkzeug 16 entfernten Handgriffbereich, der von einem Bediener umgriffen werden kann, so wie einen Kopfbereich 15 oberhalb des Werkzeugs 16, der ebenfalls zur Führung der Stichsäge 11 in an sich bekannter Weise geeignet ist.

Das Werkzeug 16 wird durch ein Sägeblatt 17 gebildet, das an seiner Rückseite durch eine Stütze 18 gestützt ist. Der Antriebsmotor 12 ist zum oszillierenden Auf- und Abbewegen des Sägeblatts 17 über ein nicht dargestelltes Hubgetriebe mit einer Aufnahme für das Werkzeug 16 bewegungsgekoppelt. An einer Vorderseite des Sägeblatts 17 befindet sich eine Zahnreihe 19 zum Einsägen in ein Werkstück 22. Die Stichsäge 11 wird zum Einsägen in das Werkstück 22 in der Regel nach vorn, d.h. in einer Arbeitsrichtung 25 bewegt. Mit dem Sägeblatt 17 lässt sich auch ein Sägeschnitt 24 in das Werkstück 22 einsägen. Es versteht sich, dass mit der Stichsäge 11 nicht nur gerade Sägeschnitte 24 durchführbar sind, sondern auch bogenförmige, d.h. zu einer linken und rechten Seite 27 und 28 bezüglich der Arbeitsrichtung 25 hin. Die Bezeichnungen linke und rechte Seite 27, 28 sowie Vorderseite 26 und Rückseite 29 werden in der nachfolgenden Beschreibung immer wieder aufgegriffen, sind aber selbstverständlich nicht in einschränkendem Sinne zu verstehen, sondern dienen nur zum leichteren Verständnis der Ausführungsbeispiele auf Basis der Zeichnung.

Die Hand-Werkzeugmaschine 10 ist mittels eines Sägetisches 21 auf dem Untergrund 23 entlang führbar. Die Führungsanordnung 35 umfasst einen Sägetisch 21, der nachfolgend ganz allgemein als Fußkörper 40 bezeichnet wird. Der Fußkörper 40 umfasst eine Sohlenplatte 41, von der ein Befestigungsabschnitt 42 zur Befestigung an einer Unterseite des Gehäuses 13 absteht. Der Befestigungsabschnitt 42 umfasst beispielsweise von der Sohlenplatte 41 abstehende Arme, deren dem Gehäuse 13 zugewandte Endbereiche durch eine Tragplatte 44 miteinander verbunden sind. Der Befestigungsabschnitt 42 hat von der Vorderseite 26 her gesehen eine U-förmige Gestalt.

Die Sohlenplatte 41 ist mit mehreren Durchbrüchen versehen, unter anderem einem Ausschnitt 45 an der Vorderseite 26 für das Werkzeug 16 sowie unterhalb des Befestigungsabschnitts 42 einem Ausschnitt 46. Die Ausschnitte 45, 46 sind sehr großflächig, so dass sich eine Struktur der Sohlenplatte 41 mit Sohlenarmen 47 ergibt, von denen die Arme 43 des Befestigungsabschnittes 42 nach oben abstehen und die durch plattenartige Verbindungsstege 48 und 49 miteinander verbunden sind. Die vorderen, freien Enden der Sohlenarme 47 begrenzen den Ausschnitt 45 für das Werkstück 14.

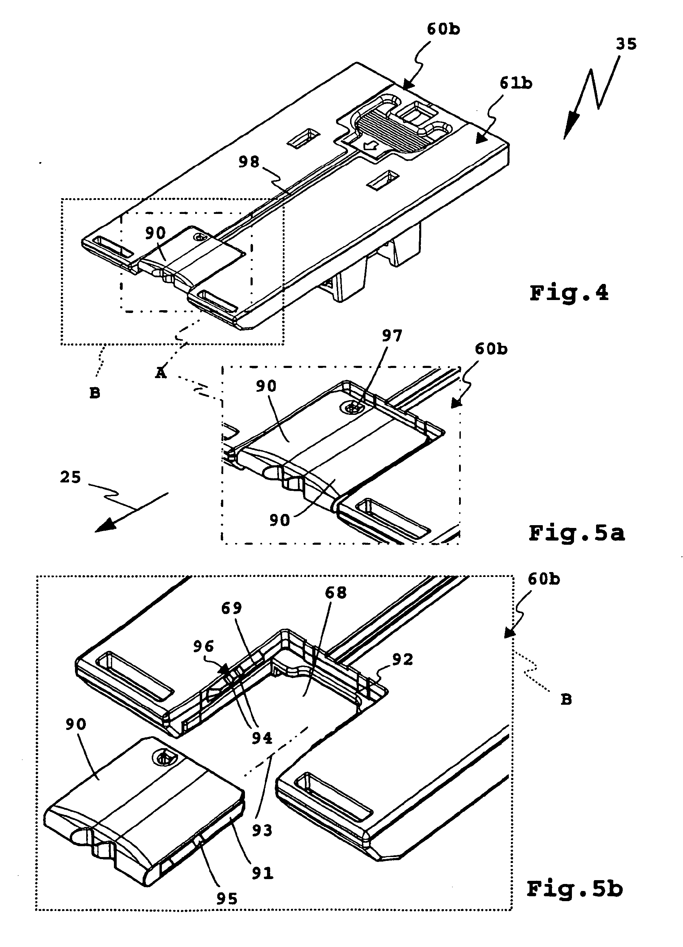

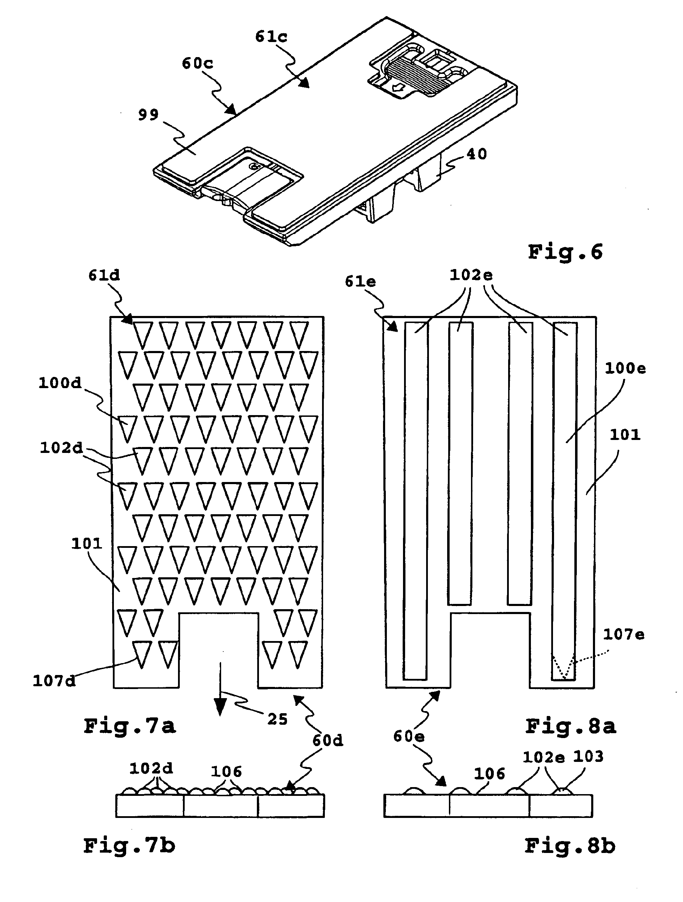

Zwar wäre es prinzipiell möglich, dass beispielsweise die Unterseite der Sohlenarme 47 sowie der Verbindungssteg 48 als Gleitfläche oder als Gleitbereich ausgestaltet ist. Dazu könnte dieser Gleitbereich beispielsweise flächig und glatt sein, wie im Zusammenhang mit einer in Figur 4 dargestellten Gleitsohle 60b dargestellt, einen Gleitbelag, beispielsweise ein Textilbelag aufweisen, wie im Zusammenhang mit einer Gleitsohle 60c gemäß Figur 6 erläutert, oder auch eine Gleitstruktur mit noppenartigen Gleitvorsprüngen, die Gleitsohlen 60a, 60d gemäß Figuren 2 und 7 aufweisen. Selbstverständlich wäre auch eine Längsstreifen aufweisende Gleitstruktur möglich, die später noch im Zusammenhang mit einer Gleitsohle 60e gemäß Figur 8 erläutert wird. Man müsste dazu beispielsweise den gesamten Fußkörper 40 austauschen, was aufwändig ist. Zudem könnte der Fußkörper 40 nicht, wie beim Ausführungsbeispiel der Fall, an seiner Unterseite mehrere Durchbrechungen und teilweise mittels in der Zeichnung nicht sichtbaren Rippen ausgesteifte Aussparungen aufweisen, was ihn trotz seiner stabilen Bauweise besonders leicht macht.

Der Fußkörper 40 ist beispielsweise aus Metall, insbesondere aus Aluminium.

Der Fußkörper 40 dient sozusagen als Führungsbasis oder Tragbasis für die bereits erwähnten an ihm befestigbaren, auswechselbaren Gleitsohlen 60a-60e deren jeweilige Gleitbereiche 61a-61e für unterschiedliche Ausgestaltungen des Untergrundes 23 angepasst sind. Der Austausch bzw. die Befestigung der Gleitsohlen 60a-60e am Fußkörper 40 gestaltet sich aufgrund der hierfür vorgesehenen, ergonomisch ausgestalteten Befestigungsmittel 55 und der nachfolgend noch erläuterten Steck-Schiebetechnik äußert einfach:

Von einer Grundwand 62, an deren vom Fußkörper 40 abgewandten Seite jeweils einer der Gleitbereiche 61a-61e der Gleitsohlen 60a-60e vorgesehen ist, stehen andererseits, jeweils randseitig Umfangswände 63 ab, nämlich an der Vorderseite 26 eine Frontwand 65 sowie mit dieser verbundene Seitenwände 64 an den beiden Seiten 27 und 28. Die Umfangswände 63 begrenzen eine insgesamt U-förmige Aufnahme für den Fußkörper 40, insgesamt also eine Steckaufnahme 66. An der Rückseite 29 befindet sich keine Umfangswand. Somit ist also die Steckaufnahme 66 nach hinten und nach oben offen, was folgendes Anstecken der Gleitsohlen 60a-60e an den Fußkörper 40 ermöglicht:

Die Sohlenplatte 41 des Fußkörpers 40 wird entlang einer durch einen Pfeil angedeuteten Steckbewegung entlang einer Steckachse 30 zu der Grundwand 62 hin bewegt, bis eine der Grundwand 62 zugeordnete, flächige Abschnitte aufweisende Unterseite der Sohlenplatte 41 auf der vom Gleitbereich 61a-61e abgewandten Oberseite 67 der Grundwand 62 zumindest partiell, d.h. dort wo an der Sohlenplatte 41 flächige Abschnitte vorhanden sind, anliegt. In dieser Steckstellung sind der Fußkörper 40 und die Gleitsohle 60a-60e relativ zueinander mit einer durch einen Pfeil angedeuteten Verschiebebewegung entlang einer Verschiebeachse 31 zueinander beweglich. Die Steckachse 30 und die Verschiebeachse 31 sind zueinander vorliegend rechtwinkelig, wobei selbstverständlich auch ein schräges Einstecken und anschließendes Weiterschieben bei einem nicht dargestellten Ausführungsbeispiel der Erfindung durchaus denkbar ist.

Durch das Verschieben entlang der Verschiebeachse 31 gelangen Haken 71-74 einer Hakenanordnung 70 mit Haken-Widerlagern 76-78 in Eingriff oder beim Lösen außer Eingriff. Die Hakenanordnung 70 bildet einen Bestandteil der Befestigungsmittel 55.

Die Haken 71 sind an den Seitenwänden 64 innenseitig, d.h. der Grundwand 62 zugewandt, angeordnet. Die Haken 71 sind als Haltebacken ausgestaltet. In der in Figur 3b dargestellten Hakstellung H greifen die Haken 71 in Haken-Widerlager 76 ein, die an den Seitenwänden 64 zugewandten Seitenrandflächen 50 der Sohlenarme 47 angeordnet sind. Dann greifen auch die an der Oberseite 67 der Grundwand 62 angeordneten Haken 72 in Haken-Widerlager 77 ein, die in Richtung des Ausschnittes 46 vor die Innenseiten der Sohlenarme 47 vorstehen. Weiterhin ist dann auch der als Anschlag ausgestaltete Haken 73 in Eingriff mit einem Haken-Widerlager, das durch den hinteren Verbindungssteg 49 gebildet wird.

Am Ende der Verschiebebewegung entlang der Verschiebeachse 31 gelangen außerdem die als Rasthaken 79 ausgestalteten Haken 74, die insofern Bestandteile von Rastmitteln 80 bilden, in rastenden Eingriff mit Rastaufnahmen 81, die vorliegend am hinteren Verbindungssteg 49 vorgesehen sind. Dann befinden sich die beiden Rasthaken 79 in einer Raststellung R (Figur 3b).

Die Seitenrandflächen 50 liegen im Wesentlichen flächig an den Seitenwänden 64 an, so dass in Richtung der beiden Seiten 27, 28 ebenfalls ein Formschluss vorhanden ist. Insgesamt ist also der Fußkörper 40 in der jeweiligen Gleitsohle 60a-60e vollständig formschlüssig aufgenommen, was eine optimale Führungseigenschaft der Hand-Werkzeugmaschine 10 bezüglich des Untergrundes 23 darstellt.

Zum Anstecken der Gleitsohlen 60a-60e an den Fußkörper 40 sind zwischen den Haken 71 Zwischenräume 82 und den zugeordneten Haken-Widerlagern 76 Zwischenräume 83 vorgesehen. Die Haken-Widerlager 76 passen sozusagen durch die Zwischenräume 82 hindurch bzw. umgekehrt passen die Haken 71 durch die Zwischenräume 83 hindurch, so dass ein Einstecken des Fußkörpers 40 in die Steckaufnahme 66 möglich ist. Sodann wird der Fußkörper 40 relativ nach vorn, d.h. in Richtung der Vorderseite 26 in der Steckaufnahme 66 der jeweiligen Gleitsohle 60a-60e verschoben, wobei Widerlagerflächen 84, 85, die beispielhaft bei den Haken 71 und den zugeordneten Haken-Widerlagern 76 eingezeichnet sind, zur Anlage aneinander gelangen, so dass die Hakenanordnung 70 bezüglich einer Normalen 32 des Gleitbereichs 61a-61e festgelegt ist. Vorzugsweise sind auch bei den anderen Haken 72 und 73 im Wesentlichen parallel zu den Gleitbereichen 61a-61e vorhandene Hakenschenkel vorhanden, um die Gleitsohle 60a-60e bezüglich der Normalen 32 am Fußkörper 40 festzulegen.

Entlang der Verschiebeachse 31, d. h. zur Begrenzung der durch den Pfeil in der Zeichnung 3a angedeuteten Verschiebebewegung, dient einerseits der vorher bereits erwähnte, als Hakenanschlag ausgestaltete Haken 73, an dem der hintere Verbindungssteg 49 anschlägt. Aber auch die anderen Haken 71, 72 sowie die zugeordneten Haken-Widerlager 76 und 77 sind jeweils mit einem Axialanschlag bezüglich der Verschiebeachse 31 versehen. Beispielsweise haben die Haken-Widerlager 76 eine L-förmige Gestalt, wobei ein parallel zur Sohlenfläche 51, d.h. der Unterseite der Sohlenplatte 41, verlaufender Schenkel an seiner Oberseite die Widerlagerfläche 85 aufweist, wohingegen ein zur Sohlenfläche 51 rechtwinkeliger Schenkel eine Anschlagfläche 86 aufweist, die die Verschiebebewegung entlang der Verschiebeachse 31 begrenzt.

Am Ende dieser Verschiebebewegung greifen auch Vorsprünge 52 an der Vorderseite 26 des Fußkörpers 40 in Aufnahmen 87 an der der Grundwand 62 zugewandten Innenseite der Frontwand 65, d.h. den beiden Frontwandabschnitten, die sich neben einer Splitterschutz-Steckaufnahme 68 der jeweiligen Gleitsohle 60a-60e erstrecken. Die Frontwand 65 ist schräg geneigt, so dass sie allein dadurch die jeweilige Aufnahme 87 an den beiden Frontwandabschnitten beidseits der Splitterschutz-Steckaufnahme 68 bildet. Durch diese Maßnahme ist der Führungskörper bezüglich der Vorderseite 26 oder in Arbeitsrichtung 25 formschlüssig in der Steckaufnahme 66 der Gleitsohle 60a-60e festgelegt.

Die jeweiligen Schenkel der Haken 71-73, die parallel zur Grundwand 62 verlaufen, haben einen solchen Abstand zur Grundwand 62, dass die zugeordneten Haken-Widerlager 76, 77 sowie der Verbindungssteg 49 formschlüssig unter diese zur Grundwand 62 parallel verlaufenden Hakenflächen oder Hakenschenkel passen und somit die Gleitsohle 60a-60e bezüglich der Normalen 32 formschlüssig, jedenfalls mit einem äußerst geringen Spiel festgelegt ist. Diese Maßnahme ermöglicht ein äußert präzises Arbeiten mit der Hand-Werkzeugmaschine 10, wenn eine Gleitsohle 60a-60e an ihr befestigt ist.

An der Rückseite 29 schlägt die Gleitsohle 60a-60e wie bereits erläutert am hinteren, einen Hakenanschlag bildenden Haken 73 an. Dann rasten auch die beiden Rasthaken 79, zwischen denen sich der Anschlag-Haken 73 befindet, in die Rastaufnahmen 81 von oben her ein. Die beiden Rasthaken 79 haben in Richtung der Grundwand 62 orientierte Nasen, deren Innenseiten Widerlagerflächen 75 bilden, die an bezüglich der Sohlenfläche 51 winkeligen, vorliegend rechtwinkeligen Seitenwänden der taschenartigen Rastaufnahmen 81 anschlagen.

Somit ist die Gleitsohle 60a-60e in Richtung der Verschiebeachse 31 einerseits durch die Frontwand 65 und den Anschlag-Haken 73 festgelegt und andererseits dazu entgegengesetzt, d.h. zugfest, durch die Rastmittel 80.

Die Rasthaken 79 sind an einem freien Ende einer Federzunge 88 angeordnet, die bezüglich der Grundwand 62 federnd ist, Die Federzunge 88 kann von der Unterseite bzw. vom Gleitbereich 61a-61e her betätigt werden, d.h. in Richtung vom Gleitbereich 61a-61e weg, so dass sie eine Betätigungshandhabe 89 zur Betätigung der Rasthaken 79 bildet. Die Rasthaken 79 gelangen nämlich beim Druck auf die Betätigungshandhabe 89 außer Eingriff mit den Rastaufnahmen 81, so dass der Fußkörper 40 und die Gleitsohle 60a-60e bezüglich der Verschiebeachse 31 freikommen und die Hakenanordnung 70 außer Eingriff gebracht werden kann.

Die Betätigungshandhabe 89 ist einstückig mit der Grundwand 62. Unterhalb der beiden Rasthaken 79 befinden sich Aussparungen, ebenso unterhalb der beiden Haken 72. Dies ermöglicht eine besonders einfache Herstellung der Gleitsohlen 60a-60e.

Die Gleitsohlen 60a-60e sind zweckmäßigerweise aus einem Kunststoff, insbesondere Polyamid. In der Praxis hat sich eine Faserverstärkung, insbesondere eine Glasfaserverstärkung des Kunststoffmateriales als vorteilhaft herausgestellt.

Auch ein Splitterschutzkörper 90, der in die Splitterschutz-Steckaufnahme 68 einsteckbar ist, besteht aus einem Kunststoffmaterial, jedenfalls einem solchen Material, das mittels des Werkzeugs 16 bzw. Sägeblatts 17 einsägbar ist. Der Splitterschutzkörper 90 hat eine im Wesentlichen plattenartige Gestalt und eine im Wesentlichen rechteckige Außenkontur. An den beiden Längsschmalseiten des Splitterschutzkörpers 90 befindet sich jeweils eine eine Längsgestalt aufweisende Führungsaufnahme 91, die zum Eingriff eines jeweiligen Führungsvorsprunges 69 an einander entgegengesetzte Innenseiten der insgesamt U-förmigen Splitterschutz-Steckaufnahme 68 angeordnet sind. Eine zusätzliche Führung bzw. ein zusätzlicher Halt des Splitterschutzkörpers 90 in der Splitterschutz-Steckaufnahme 68 wird zweckmäßigerweise durch einen weiteren Haltevorsprung an einer Stirnseite der Steckaufnahme 68 bereitgestellt, die in eine in der Zeichnung nicht sichtbare, ebenfalls stirnseitige Halteaufnahme am Splitterschutzkörper 90 eingreift, wenn dieser wie in Figur 5a dargestellt an der Gleitsohle 60a-60 befestigt ist.

Der Splitterschutzkörper 90 wird bei angetriebenem Sägeblatt 17 in die Steckaufnahme 68 eingesteckt, so dass das Sägeblatt 17 den Splitterschutzkörper 90 von seiner Stirnseite her einsägt. Dadurch liegt der Splitterschutzkörper 90 beidseits dieses Sägeschnittes nahe am Sägeblatt 17 an und verhindert somit bis zu einem Bereich nahe beim Sägeblatt 17, dass das Sägeblatt 17 bei seiner Aufwärtsbewegung in Richtung des Gehäuses 13 aus dem Werkstück 22 Späne ausreißt. Der Splitterschutzkörper 90 drückt also in an sich bekannter Weise auf das Werkstück 22. Die vorteilhafte Anordnung des Splitterschutzkörpers 90 unmittelbar am Untergrund 23 wird dadurch ermöglicht, dass dieser an der Gleitsohle 60a-60e befestigt ist.

Im Verschleißfall des Splitterschutzkörpers 90 erweist sich die folgende Maßnahme als zweckmäßig:
An den beiden Führungsvorsprüngen 69 sind bezüglich einer Steckachse 93, entlang derer der Splitterschutzkörper 90 in die Steckaufnahme 68 einsteckbar bzw. aus dieser ausziehbar ist, zueinander beabstandeten Rastaufnahmen 94 zur Aufnahme von Rastvorsprüngen 95 vorhanden, die an den Führungsaufnahmen 91 des Splitterschutzkörpers 90 vorgesehen sind. Zunächst rastet also der Splitterschutzkörper 90 beim Einstecken in die Steckaufnahme 68 in die von der Stirnseite der Steckaufnahme 68 entfernteren Rastaufnahmen 94 ein und kann dann bei weiterem Verschleiß näher zur Stirnwand hin verschoben werden, wo er dann in die zweiten, näher bei der Stirnwand befindlichen Rastaufnahmen 94 einrasten kann.

Eine vorteilhaft an der Oberseite des Splitterschutzkörpers 90 vorgesehenen Aufnahme 97 dient zum Einstecken eines Zugwerkzeuges, mit dem der Splitterschutzkörper 90 aus der Steckaufnahme 68 herausgezogen werden kann.

In Figur 5a ist der Splitterschutzkörper in einer von der Stirnseite der Steckaufnahme 68 weiter entfernteren, ersten Raststellung, in Figur 4 einer zur Stirnseite der Steckaufnahme 68 hin verstellten, zweiten Raststellung dargestellt.

Die Rasthaken 79 haben eine bügelartige Gestalt und übergreifen den hinteren Verbindungssteg 49.

Bei der Gleitsohle 60b ist der Gleitbereich 61b glattflächig. Lediglich in der Längsmitte ist in an sich bekannter Weise ein Spanabfuhrkanal 98 vorgesehen, durch den Späne in Richtung der Rückseite 29 weggefördert werden können. Bei dem Gleitbereich 61b kann es sich unmittelbar um das Material der Grundwand 62 handeln. Es ist auch möglich, dass der Gleitbereich 61b mit einer Beschichtung versehen ist, beispielsweise mit Teflon oder einem sonstigen gleitfähigen Material.

Bei der Gleitsohle 60c ist an der Grundwand 62 zur Bildung des Gleitbereiches 61c eine Gleitplatte 99 an der Grundwand 62 befestigt, vorzugsweise lösbar. Die Gleitplatte 99 besteht beispielsweise aus einem Gleitgewebe, einem Gleitgewirk, z.B. Filz oder dergleichen. Auch ein Kompositmaterial aus Kunststoff und einem Gewebematerial ist denkbar. Prinzipiell könnte man die Gleitplatte 99 an der Grundwand 62 dauerhaft befestigen, beispielsweise ankleben. Bevorzugt ist jedoch eine Klettverbindung zwischen den beiden vorgenannten Komponenten, die ein leichtes Auswechseln der Gleitplatte 99 bei Verschleiß möglich macht. Selbst wenn die Gleitplatte 99 verschlissen ist und die Hand-Werkzeugmaschine 10 dennoch weiterbetrieben wird, führt dies nicht zur Beschädigung des Fußkörpers 40, da dann immer noch der Grundkörper der Gleitsohle 60c einen Schutz für den Fußkörper 40 bildet.

Bei den Gleitsohlen 60a, 60d und 60e sind zur Bildung der Gleitbereiche 61a, 61d und 61e Gleitstrukturen 100a, 100d und 100e vorgesehen. Die Gleitstrukturen 100a-100e umfassen vor eine Grundfläche 101 vorstehende Gleitvorsprünge 102a, 102d und 102e, die zum Gleiten auf dem Untergrund 23 vorgesehen sind.

Die Gleitvorsprünge 102a-102e sind mit einem jeweiligen Grundkörper der Gleitsohlen 60a, 60d, und 60e einstückig, wobei selbstverständlich auch ein Ankleben, Anschweißen oder eine sonstige feste Verbindung von Gleitvorsprungkörpern an einem Gleitsohlen-Grundkörper ohne weiteres möglich ist.

Die Gleitvorsprünge 102a, 102d und 102e haben jeweils eine Wölbung 103 von der Grundfläche 101 weg. Während die Gleitvorsprünge 102e eine Längsgestalt aufweisen und zueinander parallel sind sowie sich zudem in Längsrichtung der Gleitsohle 60e, d.h. in der Arbeitsrichtung 25, erstrecken, bilden die Gleitvorsprünge 102a und 102d jeweils eine Noppenstruktur bzw. sind in der Art von Noppen ausgestaltet.

Die Gleitvorsprünge 102a, 102d sind zudem reihenartig hintereinander angeordnet und bilden Gleitvorsprung-Reihen. In Figur 2 sind beispielhaft zwei Gleitvorsprung-Reihen 104, 105 eingezeichnet. Etwa in der Mitte der Zeichnung erkennt man gut, dass zwischen jeweils zwei Gleitvorsprüngen 102a der Gleitvorsprung-Reihe 104 bezüglich einer Reihenrichtung 108, in der die Gleitvorsprünge 102a hintereinander angeordnet sind und die vorliegend der Arbeitsrichtung 25 entspricht, jeweils ein Gleitvorsprung 102a der anderen Gleitvorsprung-Reihe 105 angeordnet ist. Der Versatz der Gleitvorsprünge 102a, 102d entlang der Reihenrichtung 108 oder der Arbeitsrichtung 25 bei zwei jeweils benachbarten Gleitvorsprung-Reihen 104, 105 wirkt sich positiv auf die Spanabfuhr aus.

Diese Anordnung ist vorteilhaft, wenn die Hand-Werkzeugmaschine 10 nicht nur entlang der Arbeitsrichtung 25, sondern auch quer, insbesondere bogenförmig dazu auf dem Untergrund 23 entlang gleitet, was beispielsweise bei bogenförmigen Sägeschnitten 24 der Fall ist.

Bei den Gleitstrukturen 100a, 100d sind nicht nur zwischen den jeweiligen Gleitvorsprung-Reihen Zwischenräume 109 vorhanden, die aufgrund der reihenartigen Anordnung der Gleitvorsprünge 102a, 102d Rinnen 106 bilden, sondern auch quer dazu Zwischenräume 110.

Die Rinnen 106 dienen einerseits zur Spanabfuhr. Andererseits können sie von einem Bediener auch als Führung genutzt werden, indem beispielsweise eine Werkstückkante in eine der Rinnen 106 eingreift, so dass die Hand-Werkzeugmaschine 10 entlang dieser Kante linear führbar ist. In diesem Zusammenhang sei erwähnt, dass auch die längsgestaltigen Gleitvorsprünge 102e als Führungen genutzt werden können.

Zur optimalen Spanabfuhr bzw. Abfuhr von Partikeln an auf dem Untergrund 23 entlang gleitenden Gleitflächen der Gleitvorsprünge 102a-102e trägt auch bei, dass diese nicht nur eine Wölbung 103 aufweisen, sondern auch Abführkonturen 107a, 107d und 107e aufweisen.

Die Gleitvorsprünge 102a weisen einen kreisförmigen Querschnitt auf. Sie sind kugelig bzw. ballig, so dass ihre Kugelmantelfläche sozusagen eine natürliche Abführkontur 107a bildet. Die Gleitvorsprünge 102a haben zweckmäßigerweise einen Durchmesser von etwa 7mm, z. B. 7,25 mm. Die Gleitvorsprünge 102a stehen etwa 1mm vor die Grundfläche 101 vor.

Die Gleitvorsprünge 102d sind in der Draufsicht dreieckförmig, d.h. also dass sie eine dreieckförmige Querschnittsbasis haben. Eine Spitze eines jeweiligen Dreiecks zeigt direkt in die Arbeitsrichtung 25, so dass die sich von dieser Spitze weg erstreckenden Seitenschenkel die Abführkontur 107d bilden.

Insbesondere an den in Arbeitsrichtung 25 vorderen Stirnseiten der langgestreckten Gleitvorsprünge 102e können ebenfalls Gleitschrägen oder Abführschrägen vorhanden sein, was in Figur 8a mit gestichelten Linien angedeutet ist. Somit ist also auch dort eine Abführkontur 107e realisierbar.

## Patentansprüche

1. Hand-Werkzeugmaschine, insbesondere Stichsäge (11), Hubsäge oder Oberfräse, mit einem in einem Gehäuse (13) angeordneten Antriebsmotor (12) zum Antreiben eines Werkzeugs (16), mit einem an dem Gehäuse (13) angeordneten Fußkörper (40) und mit einer Gleitsohle (60a-60e), die eine Grundwand (62) zum Überdecken einer Sohlenfläche (51) des Fußkörpers (40) und einen an der Grundwand (62) angeordneten Gleitbereich (61a-61e) zum Gleiten auf einem Untergrund (23), insbesondere auf einem mit der Hand-Werkzeugmaschine (10) zu bearbeitenden Werkstück (22), aufweist, und mit Befestigungsmitteln (55) zur lösbaren Befestigung der Gleitsohle (60a-60e) an dem Fußkörper (40), wobei die Befestigungsmittel (55) eine Haken (71-74) und Haken-Widerlager (76-78) aufweisende Hakenanordnung (70) zum Verhaken der Gleitsohle (60a-60e) mit dem Fußkörper (40) umfassen, wobei die Hakenanordnung (70) die Gleitsohle (60a-60e) formschlüssig zumindest bezüglich einer Normalen (32) des Gleitbereichs (61a-61e) an dem Fußkörper (40) festlegt, wobei von der Grundwand (62) der Gleitsohle (60a-60e) mindestens eine Umfangswand (63) winkelig absteht, die einer Seitenrandfläche (50) des Fußkörpers (40) zur insbesondere flächigen Anlage an der Seitenrandfläche (50) zugeordnet ist, wobei die mindestens eine Umfangswand (63) eine in einer zum Bearbeiten des Werkstücks (22) vorgesehenen Arbeitsrichtung (25) vordere Frontwand (65) und/oder eine in Arbeitsrichtung (25) hintere Rückwand und/oder eine Seitenwand (64) umfasst, **dadurch gekennzeichnet, dass** die mindestens eine Umfangswand (63) zum Halt der Gleitsohle (60a-60e) an dem Fußkörper (40) bezüglich der Normalen (32) des Gleitbereichs (61a-61e) ausgestaltet ist, wobei an der mindestens einen Umfangswand (63) mindestens ein Haken-Widerlager (76-78) oder mindestens ein Haken (71-74) der Hakenanordnung (70) angeordnet ist und/oder die mindestens eine Umfangswand (63) eine Aufnahme (87) zur Aufnahme des Fußkörpers (40) und/oder einen Vorsprung zum Eingriff in den Fußkörper (40) aufweist oder bildet, dass der Fußkörper (40) und die Gleitsohle (60a-60e) zur Einnahme einer Steckstellung aneinander ansteckbar sind, und in der Steckstellung in eine Hakstellung (H) verschieblich sind, in der Haken (71-74) und Haken-Widerlager (76-78) der Hakenanordnung (70) miteinander verhakt sind.

2. Hand-Werkzeugmaschine nach Anspruch 1, **dadurch gekennzeichnet, dass** an einander entgegengesetzten Endbereichen der Gleitsohle (60a-60e) einerseits eine Umfangswand (63) und andererseits eine Einstecköffnung und ein Haken (71-74) und/oder ein Haken-Widerlager (76-78) angeordnet sind.

3. Hand-Werkzeugmaschine nach Anspruch 1 oder 2, **dadurch gekennzeichnet, dass** die Aufnahme (87) zur Aufnahme des Fußkörpers (40) und/oder der Vorsprung zum Eingriff in den Fußkörper (40) an der Frontwand (65) angeordnet ist.

4. Hand-Werkzeugmaschine nach einem der vorhergehenden Ansprüche, **dadurch gekennzeichnet, dass** die Gleitsohle (60a-60e) eine Steckaufnahme (66) zum Einstecken des Fußkörpers (40) aufweist.

5. Hand-Werkzeugmaschine nach einem der vorhergehenden Ansprüche, **dadurch gekennzeichnet, dass** an dem Fußkörper (40) und der Gleitsohle (60a-60e) Rastmittel (80) zum Verrasten der Gleitsohle (60a-60e) mit dem Fußkörper (40) vorhanden sind.

6. Hand-Werkzeugmaschine nach Anspruch 5, **dadurch gekennzeichnet, dass** eine Betätigungshandhabe (89) zum Verstellen eines Rasthakens (79) der Rastmittel (80) aus einer Raststellung (R) in eine Lösestellung an der Grundwand (62) angeordnet ist.

7. Hand-Werkzeugmaschine nach einem der vorhergehenden Ansprüche, **dadurch gekennzeichnet, dass** die Gleitsohle (60a-60e) und der Fußkörper (40) beim Verschieben entlang einer Verschieberichtung zueinander hin mit einem Anschlag aneinander anschlagen, und dass mindestens ein den Fußkörper (40) mit der Gleitsohle (60a-60e) verrastender Rasthaken (79) eine Widerlagerfläche (75) für eine zugfeste Verbindung entgegen der Verschieberichtung zwischen der Gleitsohle (60a-60e) und dem Fußkörper (40) aufweist.

8. Hand-Werkzeugmaschine nach einem der vorhergehenden Ansprüche, **dadurch gekennzeichnet, dass** die Hakenanordnung (70) mindestens einen an der Grundwand (62) der Gleitsohle (60a-60e) angeordneten Haken (71-74) und/oder mindestens ein an der Grundwand (62) angeordnetes Haken-Widerlager (76-78) umfasst, wobei der Gleitbereich (61a-61e) und der mindestens eine Haken (71-74) beziehungsweise das mindestens eine Haken-Widerlager (76-78) an einander entgegengesetzten Seiten der Grundwand (62) angeordnet sind.

9. Hand-Werkzeugmaschine nach Anspruch 8, **dadurch gekennzeichnet, dass** der mindestens eine an der Grundwand (62) der Gleitsohle (60a-60e) angeordnete Haken (71-74) oder das mindestens eine an der Grundwand (62) angeordnete Haken-Widerlager (76-78) einen Abstand zu einer von der Grundwand (62) der Gleitsohle (60a-60e) winkelig abstehenden Umfangswand (63) aufweisen.

10. Hand-Werkzeugmaschine nach einem der vorhergehenden Ansprüche, **dadurch gekennzeichnet, dass** an einer von dem Gleitbereich (61a-61e) abgewandten Oberseite (67) der Grundwand (62) der Gleitsohle (60a-60e) mindestens ein, insbesondere von einer Seitenwand (64) der Gleitsohle (60a-60e) beabstandeter, Haken (72) angeordnet ist, wobei sich zweckmäßigerweise ein Hakenvorsprung des an der Oberseite angeordneten Hakens (72) und ein Hakenvorsprung eines an der Seitenwand (64) angeordneten Hakens (71) gegenüberliegen.

11. Hand-Werkzeugmaschine nach einem der vorhergehenden Ansprüche, **dadurch gekennzeichnet, dass** an dem Fußkörper (40) oder der Gleitsohle (60a-60e) eine Splitterschutz-Steckaufnahme (68) für einen durch das Werkzeug (16) einschneidbaren Splitterschutzkörper (90) angeordnet ist, der beim Betrieb der Hand-Werkzeugmaschine (10) zur Verhinderung eines Aussplitterns von Spänen aus dem Werkstück (22) nahe bei dem Werkstück (22) angeordnet ist oder auf dem Werkstück (22) aufliegt, und dass an dem Splitterschutzkörper (90) und der Splitterschutz-Steckaufnahme (66) eine Rastanordnung (96) zum Verrasten des Splitterschutzkörpers (90) in mindestens zwei Stellungen mit unterschiedlichem Abstand zu dem Werkzeug (16) vorgesehen sind.

12. Hand-Werkzeugmaschine nach einem der vorhergehenden Ansprüche, **dadurch gekennzeichnet, dass** an dem Gleitbereich (61a-61e), insbesondere auswechselbar, eine Gleitplatte (99) und/oder ein Gleitgewebe und/oder ein Gleitgewirk und/oder vor eine Grundfläche (101) vorstehende Gleitvorsprünge (102a; 102d; 102e) zum Gleiten auf dem Untergrund (23) vorgesehen sind.

13. Gleitsohle (60a-60e) für eine Hand-Werkzeugmaschine (10), insbesondere eine Hubsäge oder Oberfräse, nach einem der vorhergehenden Ansprüche, wobei die Hand-Werkzeugmaschine einen in einem Gehäuse (13) angeordneten Antriebsmotor (12) zum Antreiben eines Werkzeugs (16), mit einem an dem Gehäuse (13) angeordneten Fußkörper (40) aufweist, wobei die Gleitsohle (60a-60e) eine Grundwand (62) zum Überdecken einer Sohlenfläche (51) des Fußkörpers (40) und einen an der Grundwand (62) angeordneten Gleitbereich (61a-61e) zum Gleiten auf einem Untergrund (23), insbesondere auf einem mit der Hand-Werkzeugmaschine (10) zu bearbeitenden Werkstück (22), aufweist, wobei Befestigungsmittel (55) zur lösbaren Befestigung der Gleitsohle (60a-60e) an dem Fußkörper (40) vorgesehen sind, wobei die Befestigungsmittel (55) eine Haken (71-74) und Haken-Widerlager (76-78) aufweisende Hakenanordnung (70) zum Verhaken der Gleitsohle (60a-60e) mit dem Fußkörper (40) umfassen, wobei die Hakenanordnung (70) die Gleitsohle (60a-60e) formschlüssig zumindest bezüglich einer Normalen (32) des Gleitbereichs (61a-61e) an dem Fußkörper (40) festlegt, wobei von der Grundwand (62) der Gleitsohle (60a-60e) mindestens eine Umfangswand (63) winkelig absteht, die einer Seitenrandfläche (50) des Fußkörpers (40) zur insbesondere flächigen Anlage an der Seitenrandfläche (50) zugeordnet ist, wobei die mindestens eine Umfangswand (63) eine in einer zum Bearbeiten des Werkstücks (22) vorgesehenen Arbeitsrichtung (25) vordere Frontwand (65) und/oder eine in Arbeitsrichtung (25) hintere Rückwand und/oder eine Seitenwand (64) umfasst, **dadurch gekennzeichnet, dass** die mindestens eine Umfangswand (63) zum Halt der Gleitsohle (60a-60e) an dem Fußkörper (40) bezüglich der Normalen (32) des Gleitbereichs (61a-61e) ausgestaltet ist, wobei an der mindestens einen Umfangswand (63) mindestens ein Haken-Widerlager (76-78) oder mindestens ein Haken (71-74) der Hakenanordnung (70) angeordnet ist und/oder die mindestens eine Umfangswand (63) eine Aufnahme (87) zur Aufnahme des Fußkörpers (40) und/oder einen Vorsprung zum Eingriff in den Fußkörper (40) aufweist oder bildet, dass der Fußkörper (40) und die Gleitsohle (60a-60e) zur Einnahme einer Steckstellung aneinander ansteckbar sind, und in der Steckstellung in eine Hakstellung (H) verschieblich sind, in der Haken (71-74) und Haken-Widerlager (76-78) der Hakenanordnung (70) miteinander verhakt sind.

## Claims

1. Hand-operated power tool, in particular compass saw (11), hacksaw or router, with a drive motor (12) for driving a tool (16) and mounted in a housing (13), with a base structure (40) attached to the housing (13) and with a slide base (60a-60e) which has a base wall (62) to cover a base of (51) of the base structure (40) and a sliding zone (61a-61e) provided on the base wall (62) for sliding on a base (23), in particular on a workpiece (22) to be machined by the hand-operated power tool (10), and with fixing means (55) for releasable fixing of the slide base (60a-60e) to the base structure (40), wherein the fixing means (55) comprise a hook arrangement (70) with hooks (71-74) and hook counter-bearings (76-78) for hooking the slide base (60a-60e) to the base structure (40), wherein the hook arrangement (70) fixes the slide base (60a-60e) to the base structure (40) with positive locking at least relative to one perpendicular (32) of the sliding zone (61a-61e), wherein at least one peripheral wall (63) stands out at an angle from the base wall (62) of the slide base (60a-60e) and is assigned a side edge face (50) of the base structure (40) for in particular flat contact at the side edge face (50), wherein the peripheral wall or walls (63) comprise a front wall (65) which is in front in a direction of working (25) provided for machining the workpiece (22) and/or a rear wall which is behind in a direction of working (25) and/or a side wall (64), **characterised in that** the peripheral wall or walls (63) is or are designed to hold the slide base (60a-60e) to the base structure (40) relative to the perpendicular (32) of the sliding zone (61a-61e), wherein at least one hook counter-bearing (76-78) or at least one hook (71-74) of the hook arrangement (70) is or are provided on the peripheral wall or walls (63), and/or the peripheral wall or walls (63) has or have or form a mount (87) to accommodate the base structure (40) and/or a projection for engaging in the base structure (40), that the base structure (40) and the slide base (60a-60e) may be plugged together to adopt a plugged position, and in the plugged position may be shifted into a hooked position (H) in which the hook (71-74) and hook counter-bearing (76-78) are hooked together.

2. Hand-operated power tool according to claim 1 **characterised in that**, at opposite end sections of the slide base (60a-60e), there are provided at one end a peripheral wall (63) and at the other end an insertion hole and a hook (71-74) and/or a hook counter-bearing (76-78).

3. Hand-operated power tool according to claim 1 or 2, **characterised in that** the mount (87) for accommodating the base structure (40) and/or the projection for engaging in the base structure (40) is/are provided on the front wall (65).

4. Hand-operated power tool according to any of the preceding claims, **characterised in that** the slide base (60a-60e) has a socket (66) into which the base structure (40) may be plugged.

5. Hand-operated power tool according to any of the preceding claims, **characterised in that** latching means (80) for engaging the slide base (60a-60e) with the base structure (40) are provided on the base structure (40) and the slide base (60a-60e).

6. Hand-operated power tool according to claim 5, **characterised in that** an operating handle (89) is provided for shifting a latching hook (79) of the latching means (80) from a latching position (R) into a release position (L) on the base wall (62).

7. Hand-operated power tool according to any of the preceding claims, **characterised in that** the slide base (60a-60e) and the base structure (40), in moving along a direction of movement towards one another, strike one another with a stop, and that at least one latching hook (79) engaging the base structure (40) with the slide base (60a-60e) has a counter-bearing face (75) for a tension-resistant connection against the direction of movement between the slide base (60a-60e) and the base structure (40).

8. Hand-operated power tool according to any of the preceding claims, **characterised in that** the hook arrangement (70) includes at least one hook (71-74) located on the base wall (62) of the slide base (60a-60e) and/or at least one hook counter-bearing (76-78) located on the base wall, wherein the sliding zone (61a-61e) and the hook or hooks (71-74) or the hook counter-bearing or counter-bearings (76-78) are provided on opposite sides of the base wall (62).

9. Hand-operated power tool according to claim 8, **characterised in that** the hook or hooks (71-74) located on the base wall (62) of the slide base (60a-60e) or the hook counter-bearing or counter-bearings (76-78) located on the base wall have clearance from a peripheral wall (63) protruding at an angle from the base wall (62) of the slide base (60a-60e).

10. Hand-operated power tool according to any of the preceding claims, **characterised in that** there is provided on a top side (67) of the base wall (62) of the slide base (60a-60e) facing away from the sliding zone (61a-61e) at least one hook (72), in particular with clearance from a side wall (64) of the slide base (60a-60e), wherein expediently a hook projection of the hook (72) provided on the top side and a hook projection of a hook (71) fitted to the side wall (64) lie opposite one another.

11. Hand-operated power tool according to any of the preceding claims, **characterised in that** there is provided on the base structure (40) or the slide base (60a-60e) a splinter guard socket (68) for a splinter guard body (90) which may be cut through the tool (16) and which in operation of the hand-operated power tool (10) may be placed close to the workpiece (22) or on the workpiece (22) to prevent chips from splintering out of the workpiece (22), and that there is provided on the splinter guard body (90) and the splinter guard socket (66) a latching arrangement (96) for engaging the splinter guard body (90) in at least two positions with varying clearance from the tool (16).

12. Hand-operated power tool according to any of the preceding claims, **characterised in that** there are provided on the sliding zone (61a-61e), in particular interchangeable, a slide plate (99) and/or a sliding woven fabric and/or a sliding knitted fabric and/or sliding projections (102a; 102d; 102e) extending in front of a base area (101) for sliding on the base (23).

13. Slide base (60a-60e) for a hand-operated power tool (10), in particular a hacksaw or router, according to any of the preceding claims, wherein the hand-operated power tool has a drive motor (12) for driving a tool (16) and mounted in a housing (13), with a base structure (40) attached to the housing (13), wherein the slide base (60a-60e) has a base wall (62) to cover a base of (51) of the base structure (40) and a sliding zone (61a-61e) provided on the base wall (62) for sliding on a base (23), in particular on a workpiece (22) to be machined by the hand-operated power tool (10), wherein fixing means (55) for releasable fixing of the slide base (60a-60e) to the base structure (40) are provided, wherein the fixing means (55) comprise a a hook arrangement (70) with hooks (71-74) and hook counter-bearings (76-78) for hooking the slide base (60a-60e) to the base structure (40), wherein the hook arrangement (70) fixes the slide base (60a-60e) to the base structure (40) with positive locking at least relative to one perpendicular (32) of the sliding zone (61a-61e), wherein at least one peripheral wall (63) stands out at an angle from the base wall (62) of the slide base (60a-60e) and is assigned a side edge face (50) of the base structure (40) for in particular flat contact at the side edge face (50), wherein the peripheral wall or walls (63) comprise a front wall (65) which is in front in a direction of working (25) provided for machining the workpiece (22) and/or a rear wall which is behind in a direction of working (25) and/or a side wall (64), **characterised in that** the peripheral wall or walls (63) is or are designed to hold the slide base (60a-60e) to the base structure (40) relative to the perpendicular (32) of the sliding zone (61a-61e), wherein at least one hook counter-bearing (76-78) or at least one hook (71-74) of the hook arrangement (70) is or are provided on the peripheral wall or walls (63), and/or the peripheral wall or walls (63) has or have or form a mount (87) to accommodate the base structure (40) and/or a projection for engaging in the base structure (40), that the base structure (40) and the slide base (60a-60e) may be plugged together to adopt a plugged position, and in the plugged position may be shifted into a hooked position (H) in which the hook (71-74) and hook counter-bearing (76-78) are hooked together.

## Revendications

1. Machine-outil manuelle, en particulier scie sauteuse (11), scie à mouvement alternatif ou défonceuse, comportant un moteur d'entraînement (12) disposé dans un boîtier (13), servant à entraîner un outil (16), comportant un corps de pied (40) disposé au niveau du boîtier (13) et comportant un patin (60a-60e), qui présente une paroi de base (62) servant à recouvrir une semelle (51) du corps de pied (40) et une zone de glissement (61a-61e) disposée au niveau de la paroi de base destinée à glisser sur un support (23), en particulier sur une pièce à usiner (22) avec la machine-outil manuelle (10), et comportant des moyens de fixation (55) servant à fixer de manière détachable le patin (60a-60e) au niveau du corps de pied (40), les moyens de fixation (55) comportant un ensemble de crochets (70) présentant des crochets (71-74) et des paliers de butée de crochet (76-78) servant à accrocher le patin (60a-60e) au corps de pied (40), l'ensemble de crochets (70) fixant le patin par complémentarité de forme au moins par rapport à la normale (32) de la zone de glissement (61a-61e) au niveau du corps de pied (40), au moins une paroi périphérique (63) faisant saillie de manière à former un angle de la paroi de base (62) du patin (60a-60e), laquelle paroi périphérique est associée à une face de bord latérale (50) du corps de pied (40) afin de venir en appui en particulier à plat au niveau de la face de bord latérale (50), la paroi périphérique (63) au moins au nombre de une comportant une paroi frontale (65) avant dans une direction de travail (25) prévue pour usiner la pièce (22) et/ou une paroi arrière dans la direction de travail (25) et/ou une paroi latérale (64), **caractérisée en ce que** la paroi périphérique (63) au moins au nombre de une est configurée pour le maintien du patin (60a-60e) au niveau du corps de pied (40) par rapport à la normale (32) de la zone de glissement (61a-61e),au moins un palier de butée de crochet (76-78) ou au moins un crochet (71-74) de l'ensemble de crochets (70) étant disposé au niveau de la paroi périphérique (63) au moins au nombre de une et/ou la paroi périphérique (63) au moins au nombre de une présentant ou formant un logement (87) servant à recevoir le corps de pied (40) et/ou une partie faisant saillie venant en prise avec le corps de pied (40), **en ce que** le corps de pied (40) et le patin (60a-60e) peuvent être enfichés l'un au niveau de l'autre afin de prendre la position d'enfichage et peuvent être déplacés de la position d'enfichage dans une position d'accrochage (H), dans laquelle des crochets (71-74) et des paliers de butée de crochet (76-78) de l'ensemble de crochets (70) sont accrochés les uns avec les autres.

2. Machine-outil manuelle selon la revendication 1, **caractérisée en ce que** d'un côté une paroi périphérique (63) et de l'autre côté une ouverture d'insertion et un crochet (71-74) et/ou un palier de butée de crochet (76-78) sont disposés au niveau de zones d'extrémité opposées les unes aux autres du patin (60a-60e).

3. Machine-outil manuelle selon la revendication 1 ou 2, **caractérisée en ce que** le logement (87) servant à recevoir le corps de pied (40) et/ou la partie faisant saillie servant à venir en prise avec le corps de pied (40) sont disposés au niveau de la paroi frontale (65).

4. Machine-outil manuelle selon l'une quelconque des revendications précédentes, **caractérisée en ce que** le patin (60a-60e) présente un logement d'enfichage (66) servant à insérer le corps de pied (40).

5. Machine-outil manuelle selon l'une quelconque des revendications précédentes, **caractérisée en ce que** des moyens d'enclenchement (80) servant à enclencher le patin (60a-60e) avec le corps de pied (40) sont présents au niveau du corps de pied (40) et du patin (60a-60e).

6. Machine-outil manuelle selon la revendication 5, **caractérisée en ce qu'**une poignée d'actionnement (89) servant à ajuster un crochet d'enclenchement (79) des moyens d'enclenchement (80) depuis une position d'enclenchement (R) dans une position de libération est disposée au niveau de la paroi de base (62).

7. Machine-outil manuelle selon l'une quelconque des revendications précédentes, **caractérisée en ce que** le patin (60a-60e) et le corps de pied (40) butent l'un contre l'autre avec une butée lors du déplacement le long d'une direction de déplacement l'un vers l'autre, et **en ce qu'**au moins un crochet d'enclenchement (79) enclenchant le corps de pied (40) avec le patin (60a-60e) présente une face de palier de butée (75) pour un assemblage résistant à la traction entre le patin (60a-60e) et le corps de pied (40) à l'encontre de la direction de déplacement.

8. Machine-outil manuelle selon l'une quelconque des revendications précédentes, **caractérisée en ce que** l'ensemble de crochets (70) comporte au moins un crochet (71-74) disposé au niveau de la paroi de base (62) du patin (60a-60e) et/ou au moins un palier de butée de crochet (76-78) disposé au niveau de la paroi de base (62), la zone de glissement (61a-61e) et le crochet au moins au nombre de un (71-74) ou le palier de butée de crochet (76-78) au moins au nombre de un, étant disposés sur des côtés opposés de la paroi de base (62).

9. Machine-outil manuelle selon la revendication 8, **caractérisée en ce que** le crochet (71-74) au moins au nombre de un disposé au niveau de la paroi de base (62) du patin (60a-60e) ou le palier de butée de crochet (76-78) au moins au nombre de un disposé au niveau de la paroi de base (62) présentent un espacement par rapport à une paroi périphérique (63) faisant saillie de la paroi de base (62) du patin (60a-60e) de manière à former un angle.

10. Machine-outil manuelle selon l'une quelconque des revendications précédentes, **caractérisée en ce qu'**au moins un crochet (72) en particulier espacé d'une paroi latérale (64) du patin (60a-60e) est disposé au niveau d'un côté supérieur (67) de la paroi de base (62) du patin (60a-60e) opposé à la zone de glissement (61a-61e), de manière appropriée, une partie faisant saillie de crochet du crochet (72) disposé au niveau du côté supérieur et une partie faisant saillie de crochet d'un crochet (71) disposé au niveau de la paroi latérale (64) se faisant face.

11. Machine-outil manuelle selon l'une quelconque des revendications précédentes, **caractérisée en ce qu'**un logement d'enfichage de protection contre les éclats (68) destiné à corps de protection contre les éclats (90) pouvant être entaillé par l'outil (16) est disposé au niveau du corps de pied (40) ou au niveau du patin (60a-60e), lequel corps de protection contre les éclats est disposé lors du fonctionnement de la machine-outil manuelle (10) à proximité de la pièce (22) afin d'empêcher une projection de copeaux en provenance de la pièce (22) ou repose sur la pièce (22), et **en ce qu'**un ensemble d'enclenchements (96) servant à enclencher le corps de protection contre les éclats (90) est prévu dans au moins deux positions à une distance différente par rapport à l'outil (16) au niveau du corps de protection d'éclats (90) et du logement d'enfichage de protection contre les éclats (66).

12. Machine-outil manuelle selon l'une quelconque des revendications précédentes, **caractérisée en ce qu'**une plaque de glissement (99) et/ou une structure textile de glissement et/ou un maillage de glissement et/ou des parties faisant saillie de glissement (102a ; 102d ; 102e) faisant saillie d'une face de base (101) servant à glisser sur le support (23) sont prévus au niveau de la zone de glissement (61a-61e), en particulier de manière interchangeable.

13. Patin (60a-60e) pour une machine-outil manuelle (10), en particulier pour une scie à mouvement alternatif ou une défonceuse, selon l'une quelconque des revendications précédentes, la machine-outil manuelle présentant un moteur d'entraînement (12) disposé dans un boîtier (13) servant à entraîner un outil (16) avec un corps de pied (40) disposé au niveau du boîtier (13), le patin (60a-60e) présentant une paroi de base (62) servant à recouvrir une semelle (51) du corps de pied (40) et une zone de glissement (61a-61e) disposée au niveau de la paroi de base (62) servant à glisser sur un support (23), en particulier sur une pièce (22) à usiner avec la machine-outil manuelle (10), des moyens de fixation (55) servant à fixer de manière détachable le patin (60a-60e) étant prévus au niveau du corps de pied (40), les moyens de fixation (55) comportant un ensemble de crochets (70) présentant des crochets (71-74) et des paliers de butée de crochet (76-78) servant à accrocher le patin (60a-60e) au corps de pied (40), l'ensemble de crochets (70) fixant le patin (60a-60e) par complémentarité de forme au moins par rapport à une normale (32) de la zone de glissement (61a-61e) au corps de pied (40), au moins une paroi périphérique (63) faisant saillie de la paroi de base (62) du patin (60a-60e) de manière à former un angle, laquelle paroi périphérique est associée à une face de bord latérale (50) du corps de pied (40) pour venir en appui à plat au niveau de la face de bord latérale (50), la paroi périphérique (63) au moins au nombre de une comportant une paroi frontale (65) avant dans une direction de travail (25) prévue pour usiner la pièce (22) et/ou une paroi arrière dans la direction de travail (25) et/ou une paroi latérale (64), **caractérisé en ce que** la paroi périphérique (63) au moins au nombre de une est configurée pour le maintien du patin (60a-60e) au niveau du corps de pied (40) par rapport à la normale (32) de la zone de glissement (61a-61e), au moins un palier de butée de crochet (76-78) ou au moins un crochet (71-74) de l'ensemble de crochets (70) étant disposé au niveau de la paroi périphérique (63) au moins au nombre de une et/ou la paroi périphérique (63) au moins au nombre de une présentant ou formant un logement (87) servant à recevoir le corps de pied (40) et/ou une partie faisant saillie servant à venir en prise avec le corps de pied (40), **en ce que** le corps de pied (40) et le patin (60a-60e) peuvent être enfichés l'un au niveau de l'autre afin de prendre une position d'enfichage et peuvent être déplacés de la position d'enfichage dans une position d'accrochage (H), dans laquelle des crochets (71-74) et des paliers de butée de crochet (76-78) de l'ensemble de crochets (70) sont accrochés les uns avec les autres.
